# EUROPEAN PATENT APPLICATION

(11) **EP 4 319 478 A1**
(43) Date of publication of application: **07.02.2024**
(21) Application number: 21934985.9
(22) Date of filing: 31.03.2021
(51) Int. Cl.: H04W 88/10, H04W 88/18

(54) **RELAY DEVICE, RELAY METHOD, AND STORAGE MEDIUM**

(71) Applicant: Softbank Corp., Tokyo 105-7529 (JP)
(72) Inventor: IIDA, Motoki, Tokyo 105-7529 (JP); KISHI, Takaki, Tokyo 105-7529 (JP); KATO, Yasumasa, Tokyo 105-7529 (JP)
(74) Representative: Meissner Bolte Partnerschaft mbB
(86) International application number: PCT/JP2021/014069
(87) International publication number: WO 2022/208823

(57) **Abstract**

There is provided a technology relating to making it possible to operate a mobile communications system at lower cost. A relay apparatus includes a processor and a storage unit, wherein the processor is configured to implement the following by executing a program stored in the storage unit: a first communication unit that receives uplink data associated with first identification information from a base station; a division integration unit that determines to transmit the uplink data to the mobile network associated with the first identification information among a plurality of mobile networks; a converter that converts a first parameter, which is included in the uplink data received from the base station, into a second parameter on the basis of the first identification information; and a second communication unit that transmits the uplink data including the second parameter to the mobile network associated with the first identification information.

## Description

### TECHNICAL FIELD

The present invention relates to a relay apparatus, a relay method, and a storage medium.

### BACKGROUND ART

LTE (Long Term Evolution), 5G (5th Generation), etc., are defined and utilized as telecommunications standards according to 3GPP (the 3rd Generation Partnership Project) for developing standards regarding mobile communications (NPL 1 and NPL 2). With mobile communications systems compliant with telecommunications standards such as LTE and 5G, a small-cell (Small-cell) base station(s) which has a smaller coverage area than that of a macro-cell (Macro-cell) base station(s) is used in order to improve the coverage of a terminal device (UE: User Equipment). The small-cell base station connects to the terminal device via an access (AC: Access Link) channel. Furthermore, the small-cell base station connects to a core network operated by a mobile network operator (MNO: Mobile Network Operator) via a wired or wireless backhaul (BH: Backhaul Link) channel. There are also proposed standards for sharing a radio channel between a plurality of mobile networks (NPL 3).

### CITATION LIST

### NON-PATENT LITERATURE

NPL 1: http: //www.3gpp.org/technologies/keywords-acronyms/98-lte
NPL 2: https: //www.3gpp.org/news-events/3gpp-news/1987-imt2020_workshop
NPL 3: http: //www.3gpp.org/news-events/3gpp-news/1592-gush

### SUMMARY OF THE INVENTION

### TECHNICAL PROBLEM

Regarding the mobile communications systems listed in the above-mentioned citation list, a base station is associated with a specific mobile network operator and is connected to a mobile network operated by this specific mobile network operator.

However, a plurality of mobile network operators provide services in many countries and there is a case where the respective mobile network operators install their base stations. It may be sometimes inefficient in terms of costs for the respective mobile network operators to install their base stations as described above.

The present invention provides a technology relating to making it possible to operate a mobile communications system at low cost.

### SOLUTION TO PROBLEM

A relay apparatus according to an aspect of the present invention is a relay apparatus including a processor and a storage unit, wherein the processor is configured to implement the following by executing a program stored in the storage unit: a first communication unit that receives uplink data associated with first identification information from a base station; a division integration unit that determines to transmit the uplink data to the mobile network associated with the first identification information among a plurality of mobile networks; a converter that converts a first parameter, which is included in the uplink data received from the base station, into a second parameter on the basis of the first identification information; and a second communication unit that transmits the uplink data including the second parameter to the mobile network associated with the first identification information.

A relay method according to an aspect of the present invention is a relay method implemented by a computer including a processor and a storage unit, wherein the method includes, by execution of a program stored in the storage unit by the processor: receiving uplink data associated with first identification information from a base station; determining to transmit the uplink data to the mobile network associated with the first identification information, from among a plurality of mobile networks; converting a first parameter, which is included in the uplink data received from the base station, into a second parameter on the basis of the first identification information; and transmitting the uplink data including the second parameter to the mobile network associated with the first identification information.

A storage medium according to an aspect of the present invention is a storage medium with a computer program stored therein for executing a relay method implemented by a computer including a processor and a storage unit, wherein the method includes, by execution of a program stored in the storage unit by the processor: receiving uplink data associated with first identification information from a base station; determining to transmit the uplink data to the mobile network associated with the first identification information, from among a plurality of mobile networks; converting a first parameter, which is included in the uplink data received from the base station, into a second parameter on the basis of the first identification information; and transmitting the uplink data including the second parameter to the mobile network associated with the first identification information.

### ADVANTAGEOUS EFFECTS OF THE INVENTION

Technology relating to making it possible to operate the mobile communications system at lower cost can be provided according to the present invention.

### BRIEF DESCRIPTION OF DRAWINGS

[Fig. 1] Fig. 1 is a block diagram illustrating a mobile communications system according to one embodiment;
[Fig. 2A] Fig. 2A is a conceptual diagram for explaining a parameter according to one embodiment;
[Fig. 2B] Fig. 2B is a conceptual diagram for explaining a parameter according to one embodiment;
[Fig. 2C] Fig. 2C is a conceptual diagram for explaining a parameter according to one embodiment;
[Fig. 2D] Fig. 2D is a conceptual diagram for explaining parameters according to one embodiment;
[Fig. 3] Fig. 3 is a block diagram illustrating a hardware configuration of a computer according to one embodiment;
[Fig. 4A] Fig. 4A is a schematic diagram for explaining a data division operation according to the embodiment;
[Fig. 4B] Fig. 4B is a schematic diagram for explaining a data integration operation according to the embodiment;
[Fig. 5] Fig. 5 is a diagram illustrating a processing flow of the mobile communications system according to one embodiment;
[Fig. 6A] Fig. 6A is a diagram illustrating one example of a configuration pattern of the mobile communications system according to one embodiment;
[Fig. 6B] Fig. 6B is a diagram illustrating one example of a configuration pattern of the mobile communications system according to one embodiment;
[Fig. 6C] Fig. 6C is a diagram illustrating one example of a configuration pattern of the mobile communications system according to one embodiment;
[Fig. 6D] Fig. 6D is a diagram illustrating one example of a configuration pattern of the mobile communications system according to one embodiment;
[Fig. 6E] Fig. 6E is a diagram illustrating one example of a configuration pattern of the mobile communications system according to one embodiment;
[Fig. 7] Fig. 7 is a block diagram illustrating a mobile communications system according to one embodiment;
[Fig. 8] Fig. 8 is a block diagram illustrating a mobile communications system according to one embodiment; and
[Fig. 9] Fig. 9 is a block diagram illustrating a mobile communications system according to one embodiment.

### DESCRIPTION OF EMBODIMENTS

Embodiments of the present invention will be described below with reference to the drawings. The following embodiments are merely illustrative and do not exclude various variations which are not explicitly specified. Furthermore, the same or similar reference numerals are assigned to the same or similar constituent elements in the drawings.

### <Embodiment 1>

This Embodiment 1 relates to a basic form of a mobile communications system capable of concurrently connecting to mobile networks MN (Mobile Networks) operated by different mobile network operators (MNO: Mobile Network Operators). In the following description, different mobile network operators will be identified with lower-case alphabet letters. For example, an apparatus XY which is a system or configuration associated with a mobile network operator a will be denoted as an apparatus XYa.

### (Entire System)

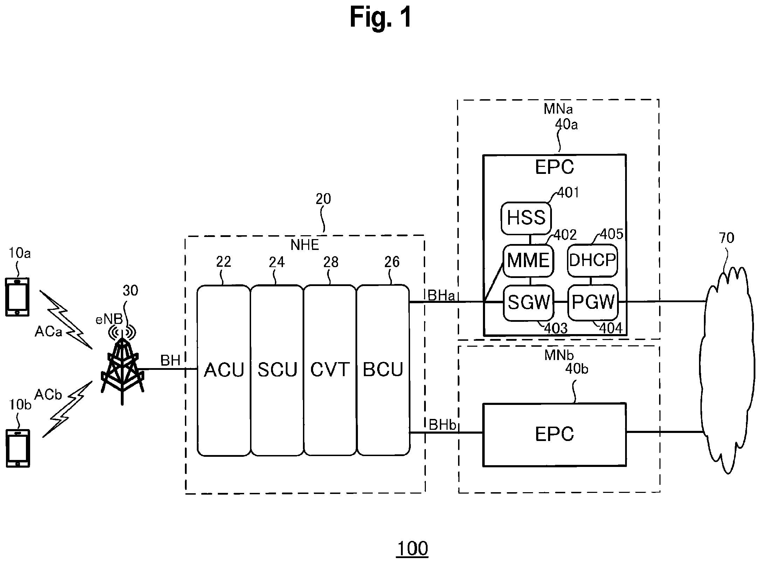

Fig. 1 is a schematic diagram illustrating the configuration of a mobile communications system according to this Embodiment 1. Part of the configuration of the mobile communications system illustrated in Fig. 1 is indicated in compliance with an architecture of the LTE standards; however, mobile communications systems according to this embodiment and other embodiments may be configured in compliance with the 5G standards or other telecommunications standards. Referring to Fig. 1, a mobile communications system 100 is configured by including terminal devices 10a and 10b, a relay apparatus 20, and mobile networks MNa and MNb.

The terminal devices 10a and 10b are mobile communications terminals such as smartphones and cell phones and are also denoted as UE (User Equipment) in the drawings. When they do not need to be associated with a mobile network operator(s), they will be hereinafter simply referred to as the "terminal devices 10."

The mobile network MNa is a platform system operated by the mobile network operator a and the mobile network MNb is a platform system operated by the mobile network operator b. Fig. 1 illustrates, for simplicity's sake, the case where only the mobile network MNa managed by the mobile network operator a and the mobile network MNb managed by the mobile network operator b are connected to each other. However, a mobile network(s) managed by another/other mobile network operator(s) may be further connected to them.

It is hereinafter assumed, for ease of explanation, that the mobile network MNa and the mobile network MNb have the same configuration. Also, if it is not specifically necessary to distinguish between the mobile networks, they will be explained without attaching small-case letters to the reference numeral.

### (Mobile network)

The mobile network MN includes a core network 40. The core network 40 is connected to a base station 30 via the relay apparatus 20 and is also connected to an external network 70.

The core network 40 is also called an EPC (Evolved Packet Core) particularly according to the LTE standards and is also called a 5GC (5th Generation Core network) according to the 5G standards.

The core network 40 is a network that mainly controls the base station 30 to manage establishment and cancellation of a backhaul channel(s) BH.

Specifically, the core network 40 includes an HSS (Home Subscriber Server) 401, an MME (Mobility Management Entity) 402, an SGW (Serving Gateway) 403, a PGW (Packet Data Network Gateway) 404, and a DHCP server (Dynamic Host Configuration Protocol server) 405.

The HSS 401 is a server for managing user identification information of a user(s) who uses a terminal device(s) 10. The MME 402 is a node which executes mobility management such as position management and calling of the terminal device(s) 10. The SGW 403 is a node for transmitting user packet data. The PGW 404 is a node having an interface with the external network 70. The DHCP server 405 is a server which assigns IP addresses to the terminal device 10 which directly connects to the base station 30, and a backhaul communication unit 26 for the relay apparatus 20. Incidentally, in order to assign the IP addresses, the PGW 404 may have such function, other than using the DHCP server 405.

The base station 30 establishes a backhaul channel(s) with the terminal device(s) and the relay apparatus via a radio bearer or by wire. Particularly according to the LTE and 5G standards, the base station may be sometimes denoted as eNB. Each base station 30 operates to form a radio access network (RAN: Radio Access Network). The base station 30 is configured to establish a direct access channel AC with the terminal device 10, other than establishing the backhaul channel BH with the relay apparatus 20.

Moreover, the base station 30 is shared by a plurality of mobile networks MN (for example, the mobile network MNa and the mobile network MNb). Accordingly, for example, communications between the terminal device 10a and the mobile network MNa are performed via the base station 30 and communications between the terminal device 10b and the mobile network MNb are performed via the base station 30. In other words, the base station 30 can connect to the terminal device 10a which is associated with the mobile network operator a, and to the terminal device 10b which is associated with the mobile network operator b.

The external network 70 is a broadband network connected via IP transmission equipment (such as a router), which is not illustrated in the drawing, and is typically the Internet.

Incidentally, the above-described configuration of the mobile network MN is merely illustrative and the configuration of the mobile network MN is not limited to this example.

### (Relay Apparatus)

Referring to Fig. 1, the relay apparatus 20 is a relay apparatus for relaying communications between the base station 30 and the mobile network MN and includes an access communication unit 22, a division integration unit 24, a converter 28, and a backhaul communication unit 26. The relay apparatus 20 is also referred to as an NHE (Neutral Host Entity) in the drawings.

The relay apparatus 20 according to this embodiment is configured from the above-mentioned constituent elements so that it can implement a relay method including the following processing for relaying the communications between the base station 30 and the mobile network MN. The following processing is implemented by, for example, execution of a program stored in the storage unit by a processor of the relay apparatus 20.

(A1) Receive uplink data associated with first identification information from the base station 30 (the access communication unit 22).

(B2) Determine to transmit the uplink data to a mobile network MN associated with the first identification information, among a plurality of mobile networks MN (the division integration unit 24).

(A3) Convert a first parameter, which is included in the uplink data received from the base station 30, into a second parameter on the basis of the first identification information (the converter 28).

(A4) Transmit the uplink data including the second parameter to the mobile network MN associated with the first identification information (the backhaul communication unit 26).

According to this embodiment as described above, the relay apparatus 20 receives the uplink data, which is associated with the first identification information, from the base station 30 and determines to transmit the uplink data to the mobile network MN which is associated with the first identification information, among the plurality of mobile networks MN. In other words, the relay apparatus 20 can perform routing (to control communication channels) based on the first identification information in the communications from the base station 30 to the mobile network MN. As a result, with the mobile communications system, one base station 30 can be shared by the plurality of mobile networks MN. This sharing can make it possible to operate the mobile communications system at much lower cost as compared to the case where different base stations 30 are provided for the mobile networks MN, respectively.

According to this embodiment, the relay apparatus 20 converts the first parameter, which is included in the uplink data received from the base station 30, into the second parameter on the basis of the first identification information associated with the uplink data received from the base station 30. As a result, for example, the relay apparatus 20 can convert the first parameter, which can be uniquely identified in the data received by the base station 30 (i.e., on the plurality of mobile networks MN), into the second parameter which can be uniquely identified on the specific mobile network MN. Consequently, for example, the parameter which is unique on the plurality of mobile networks MN (the first parameter) is used for the communications between the terminal device 10 and the base station 30, but the mobile network operator a which operates the mobile network MNa can use the parameter which is set by the mobile network operator a (the second parameter) on the mobile network MNa without being conscious of parameters used by the other mobile network MNb.

Furthermore, the relay apparatus 20 according to this embodiment is configured so that it can implement a relay method including the following processing for relaying the communications between the base station 30 and the mobile network MN.

(B1) Receive downlink data from the plurality of mobile networks MN (the backhaul communication unit 26).

(B2) Convert the second parameter included in the downlink data into the first parameter (the converter 28).

(B3) Integrate the downlink data received from the plurality of mobile networks (the division integration unit 24).

(B4) Output the downlink data, which includes the first parameter and has been integrated, to the base station 30 (the access communication unit 22).

Constituent elements for executing the above-described respective processing will be specifically described below.

The access communication unit 22 is a communication apparatus for performing communications such as transmission and reception (or input and output; and the same will apply hereinafter) of data (or messages; and the same will apply hereinafter) to and from one and more base stations 30. The communications between the access communication unit 22 and the base station(s) 30 may be radio communications or wired communications. The access communication unit 22 is denoted as an ACU (Access Communication Unit) in the drawings.

The access communication unit 22 is configured to output the uplink data received from the base station 30 as, for example, packet data blocks, control signals, or messages. In the following explanation, the packet data blocks, the control signals, or the messages can be replaced with each other. For example, the packet data blocks can be replaced with the control signals or the messages.

Furthermore, the access communication unit 22 is configured to transmit the packet data blocks, which are the downlink data provided from the division integration unit 24, to the base station 30. Both the uplink data received by the access communication unit 22 and the downlink data transmitted by the access communication unit 22 are composed of a plurality pieces of packet data blocks. Identification information ID for identifying a mobile network operator is assigned to the individual packet data blocks. The identification information ID makes it possible to identify the mobile network operator corresponding to each individual packet data block.

The identification information ID is specific information for identifying the relevant mobile network operator and, for example, a public land mobile network number PLMN (Public Land Mobile Network) number can be used. The PLMN number is composed of a three-digit country number (MCC: Mobile Country Code) and a two- or three-digit network number (MNC: Mobile Network Code) for identifying the relevant operator. However, the identification information ID may be assigned according to a system other than the PLMN number. For simplicity's sake, the identification information of the mobile network operator a will be hereinafter denoted as IDa.

The backhaul communication unit 26 establishes each wired or wireless backhaul channel BH, which is associated with specific identification information ID, with a mobile network MN associated with the specific identification information. When the backhaul channel BH is wired, the respective backhaul channels BH may be divided according to IP addresses with respect to wired cables or a plurality of wired cables may be physically divided for the respective backhaul channels BH. In Fig. 1, the backhaul communication unit 26 establishes a backhaul channel BHa with the mobile network MNa associated with the identification information IDa for identifying the mobile network operator a. Also, the backhaul communication unit 26 establishes a backhaul channel BHb with the mobile network MNb associated with the identification information IDb for identifying the mobile network operator b.

When the communications between the backhaul communication unit 26 and the mobile network MN are wireless, the uplink data and the downlink data transmitted and received via the backhaul channel BH are radio waves which are modulated with carrier waves with frequency bandwidth designated by their respectively corresponding mobile networks MN. The backhaul communication unit 26 is denoted as a BCU (Backhaul Communication Unit) in the drawings.

The backhaul channel(s) BH formed by the backhaul communication unit 26 may be a channel(s) for transmitting the packet data via an antenna. The packet data may be modulated with carrier waves with a specified frequency bandwidth by a specified modulation method in accordance with telecommunications standards.

The backhaul communication unit 26 may be provided with a limiting means for a connection point. The limiting means for the connection point has a function that permits connection only to a specific mobile network operator and prohibits connection to other mobile network operators. A representative example of the above-described limiting means is a SIM (Subscriber Identity Module).

Identification information IDx for identifying a specific mobile network operator x is assigned to the SIM. The SIM can connect only to a mobile network MNx operated by a mobile network operator x identified by the identification information IDx which is assigned to each SIM and its connection to a mobile network MNy operated by another mobile network operator y is limited. In this embodiment, the SIM provided in the backhaul communication unit 26 limits connections to the mobile networks MNa, MNb. The SIM may be configured in a form of a SIM card which is hardware so that it can be attached to, or detached from, each backhaul communication unit 26; or the SIM can be configured as eSIM (embedded SIM) which is software so as to set arbitrary identification information IDx.

The SIM card is provided in various forms such as a standard SIM, a micro-SIM, and a nano SIM. It is possible to change a connection point to a different mobile network MN by switching to a SIM card to which different identification information ID is assigned.

When the eSIM is applied, for example, it is mounted as a rewritable memory card on a card reader for the backhaul communication unit 26. It is configured so that the identification information ID can be downloaded from a remote place to a memory card for the backhaul communication unit 26. For example, identification information IDa is downloaded to the memory for the backhaul communication unit 26. Through this operation, the backhaul communication unit 26 is set to connect to the mobile network MNa. Even if specific identification information IDx is downloaded to the memory card once to connect to the mobile network MNx, the eSIM can download other identification information IDy later to rewrite the identification information, and make a change to connect to a different mobile network MN.

The division integration unit (SCU: Splitting and Combining Unit) 24 determines a mobile network MN which is to become a transmission destination of the uplink data received by the access communication unit 22 from the base station 30. In detail, the division integration unit 24 firstly identifies the specific identification information ID which is associated with the uplink data received by the access communication unit 22 from the base station 30 or which is included in the uplink data. The division integration unit 24 determines to transmit the uplink data to the specific mobile network MN associated with the identified identification information ID among the plurality of mobile networks MN.

Information indicating the correspondence relationship between the identification information ID and the mobile network MN is stored, for example, in a storage unit for the relay apparatus 20. The division integration unit 24 may refer to information indicating the correspondence relationship stored in the storage unit and determine the mobile network MN which is to be the transmission destination.

Furthermore, the division integration unit 24 integrates the downlink data received by the backhaul communication unit 26 from the plurality of mobile networks MN. The integration of the downlink data is performed by a method capable of identifying the data before the integration. Also, the integration of the downlink data may be performed in the sequential order of their reception by the mobile networks MN or may be performed in accordance with other rules.

The division integration unit 24 may be functionally implemented by, for example, causing specified hardware to be operated by software.

The converter (CVT: Converter) 28 converts the first parameter included in the uplink data into the second parameter on the basis of the identification information ID associated with the uplink data received by the access communication unit 22 from the base station 30 (hereinafter also referred to as "first conversion"). The first parameter is a parameter which can be identified, for example, on the plurality of mobile networks MN or globally uniquely. The second parameter is a parameter which can be identified uniquely on a specific mobile network MN (for example, the mobile network MN where the second parameter is used) among the plurality of mobile networks MN.

Furthermore, the converter 28 converts the second parameter, which is included in the downlink data received by the backhaul communication unit 26 from the mobile network MN, into the first parameter (hereinafter also referred to as "second conversion").

The above-described parameter conversion processing by the converter 28 is performed by, for example, referring to information indicating the correspondence relationship between the first parameter and the second parameter (for example, a conversion table). The information indicating the correspondence relationship between the first parameter and the second parameter is set to each mobile network MN. Accordingly, for example, let us assume that the mobile network MNa is associated with first identification information a and the first identification information a is associated with a conversion table a. In this case, the converter 28 converts the first parameter into the second parameter on the basis of the conversion table a associated with the first identification information a regarding the parameter transmitted to the mobile network MNa. The information indicating the above-described correspondence relationship may be stored in the storage unit for the relay apparatus 20 or may be acquired from an external apparatus of the relay apparatus 20. For example, when the first parameter and the second parameter are identification information of the base station 30, they may include information for associating the parameter capable of uniquely identifying the base station 30 on the plurality of mobile networks MN (the first parameter) with the parameter capable of uniquely identifying the base station 30 on a specific mobile network MN (for example, the mobile network MNa) (the second parameter). In other words, the first parameter and the second parameter include the identification information of the base station.

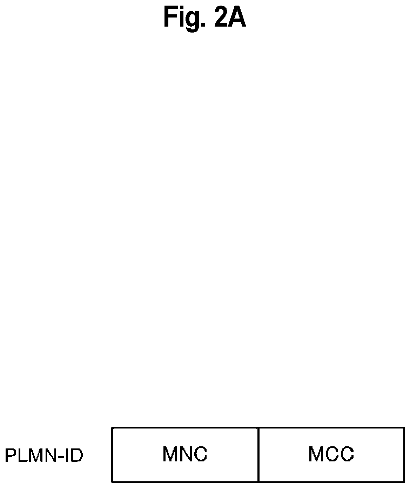

Referring to Fig. 2A to Fig. 2C, an explanation will be provided about a PLMN-ID, a TAI (Tracking Area Identifier), and an E-CGI (EUTRAN-Cell Global Identifier) as examples of the parameters included in the uplink data and the downlink data in the mobile communications system 100. Referring to Fig. 2A, the PLMN-ID is configured by coupling an MNC and an MCC together. The PLMN-ID is information for identifying the relevant mobile network MN. In this embodiment, the PLMN-ID (or the PLMN number) may be sometimes simply referred to as PLMN.

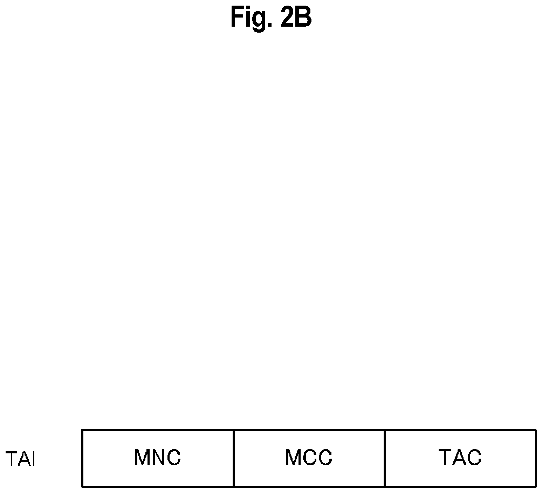

Referring to Fig. 2B, the TAI is configured by coupling an MNC, an MCC, and a TAC (Tracking Area Code) together.

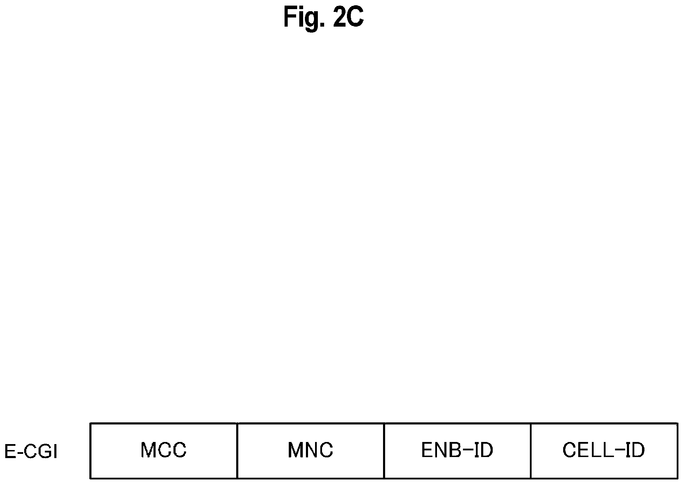

Referring to Fig. 2C, the E-CGI is configured by coupling an MCC, an MNC, an ENB-ID, and a CELL-ID together.

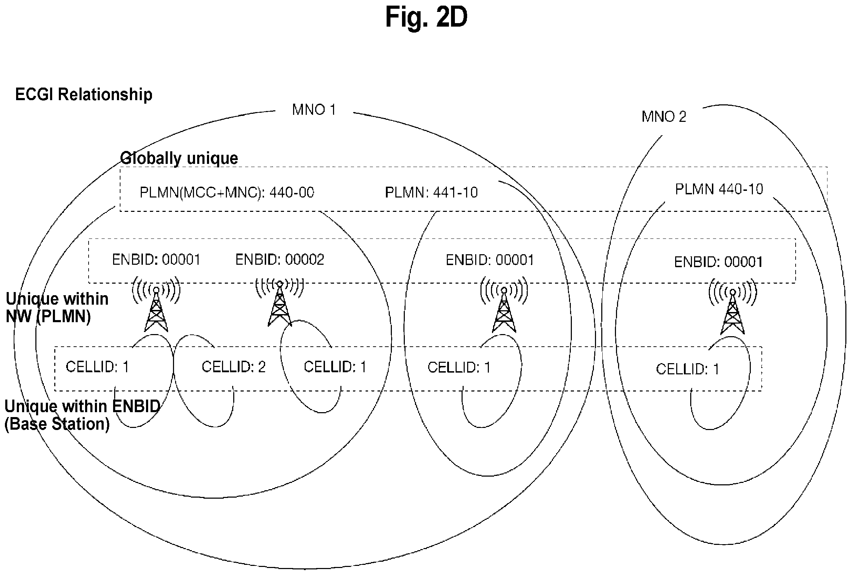

An E-CGI relationship will be explained with reference to Fig. 2D. Mobile networks MN of a mobile network operator (MNO) and a mobile network operator MNO2, base stations, and cells are illustrated conceptually. Fig. 2D shows a PLMN of each mobile network MN for each mobile network operator (MNO1 and MNO2), an ENB-ID of each base station, and a CELL-ID of each cell. The E-CGI is configured by coupling the relevant PLMNs (MCC+MNC), ENB-IDs, and CELL-IDs together.

As can be recognized from the CELL-IDs indicated in Fig. 2D, there are a plurality of cells with the CELL-ID "1." In other words, even if the CELL-ID is unique within the same base station, it may not sometimes be unique within the same mobile network MN or within other operated networks. Similarly, even if the ENB-ID is unique within the same mobile network MN, it may not sometimes be unique within other mobile networks MN. If the base station 30 according to this embodiment is shared by a plurality of mobile networks MN under the above-described circumstances, the value of the CELL-ID, etc., which is set by each mobile network operator or the like may not be sometimes unique. For example, there may be a case where the CELL-IDs for referring to different cells become the same value, or a case where the ENB-IDs for referring to base stations may become the same value. Moreover, there is fear due to restrictions which each mobile network operator originally has that the CELL-ID or the like may become a value which each mobile network operator cannot use. In this embodiment, the above-described first conversion and second conversion are performed in order to avoid such problems.

For example, if the E-CGI is "440-00-0001-1" (the first parameter), the converter 28 may convert the E-CGI into "441-10-0002-1" (the second parameter) by means of the first conversion. Also, the converter 28 may convert the E-CGI from "441-10-0002-1"

(the second parameter) to "440-00-0001-1" (the first parameter) by means of the second conversion. Similarly, the first conversion and the second conversion by the converter 28 can be performed on, for example, a PLMN, a TAI, and an EAI (Emergency Area Identifier). The first and second parameters converted by the converter 28 may be parameters which may not be available for the entire E-CGI, but may be available individually, for example, each of the MCC, the MNC, the ENB-ID, and the CELL-ID.

Referring back to the explanation of Fig. 1, either the processing by the division integration unit 24 or the processing by the converter 28 may be performed first at the relay apparatus 20. Specifically speaking, in communications from the base station 30 to the mobile network MN, the conversion processing by the converter 28 may be performed after the determination of the transmission destination by the division integration unit 24 or the determination of the transmission destination by the division integration unit 24 may be performed after the conversion processing by the converter 28. Furthermore, in communications from the mobile network MN to the base station 30, the integration processing by the division integration unit 24 may be performed after the conversion processing by the converter 28 or the conversion processing by the converter 28 may be performed after the integration processing by the division integration unit 24.

The relay apparatus 20 is provided in the network between the base station 30 and the mobile network MN as illustrated in Fig. 1, but there is no limitation to such configuration. The relay apparatus 20 may be provided, for example, at the base station 30.

The access communication unit 22, the division integration unit 24, the converter 28, and the backhaul communication unit 26 may be implemented chiefly by hardware or may be implemented in cooperation with software, a processor, and other hardware by execution of a computer program by the processor.

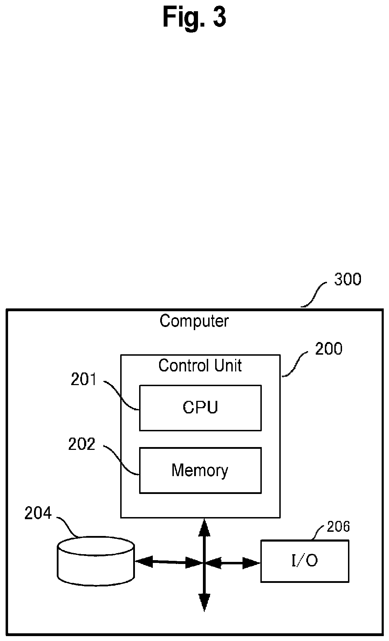

Fig. 3 illustrates an example of a hardware configuration of a computer for implementing at least part of the relay apparatus 20 or the access communication unit 22, the division integration unit 24, the converter 28, and the backhaul communication unit 26. A computer 300 includes a control unit 200, a storage unit 204, and an input/output unit (I/O) 206 as illustrated in Fig. 3.

The control unit 200 includes a central processing unit (CPU: Central Processing Unit) 201 and a memory 202 and implements functions, which are possessed by the relay apparatus 20, by execution of a computer program stored in the memory 202 by the CPU 201.

The input/output unit 206 is configured to transmit/receive data to/from an external apparatus. The input/output unit 206 is, for example, a communication unit.

The storage unit 204 stores various kinds of data such as data input by the input/output unit 206, data to be output by the input/output unit 206, and data as a result of processing by the control unit 200. The storage unit 204 is configured from, for example, a magnetic disk or a semiconductor. Data stored in the storage unit 204 include, for example, the uplink data and the downlink data.

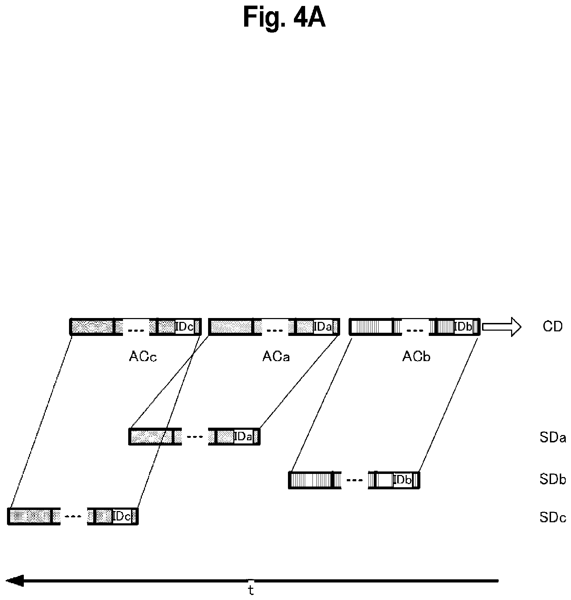

Referring to Fig. 4A, an explanation will be provided about one example of an uplink data division operation (communication channel control) by the division integration unit 24 of the relay apparatus 20. Fig. 4A shows a case where integrated data CD in which packet data blocks ACb, ACa, ACc transmitted from terminal devices 10b, 10a, 10c in this sequential order are coupled together is divided and supplied to a selected backhaul channel BH. Identification information IDb, IDa, IDcfor identifying the relevant mobile network operator is assigned to the packet data blocks from the respective terminal devices 10. The division integration unit 24 writes the packet data blocks to the storage unit 204 (see Fig. 3), for example, in the order of arrival. Then, the division integration unit 24 reads the packet data blocks in the written order by means of a function of the storage unit 204. The read packet data blocks are supplied as divided data SDx, which are sorted by each mobile network operator x according to the identification information IDx, by the backhaul communication unit 26. The supplied divided data SDx is transmitted to the corresponding mobile network MNx via the backhaul channel BHx.

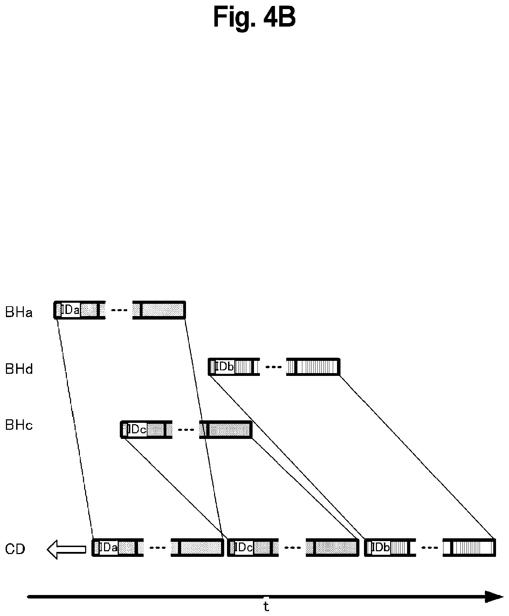

Referring to Fig. 4B, an explanation will be provided about a downlink data integration operation by the division integration unit 24. Fig. 4B shows a case where the packet data blocks are supplied from the mobile networks MNa, MNc, MNb in this sequential order via their backhaul channels BHa, BHc, BHb to the backhaul communication unit 26. The identification information IDa, IDc, IDb for identifying the relevant mobile network operator is assigned to each packet data block. Each backhaul communication unit 26 outputs the packet data blocks in the order of arrival. The division integration unit 24 writes the packet data blocks to the storage unit 204 in the order of output. Then, the division integration unit 24 reads the packet data blocks in the written order by means of the function of the storage unit 204 and outputs them as the integrated data CD to the access communication unit 22. The access communication unit 22 sequentially transmits the packet data blocks by using their common frequency bandwidth. Each terminal device 10a, 10c, 10b can refer to all pieces of the packet data provided with the same frequency bandwidth, but identifies and receives only the packet data block(s) destined for the mobile network operator x, to which it subscribes, according to the identification information IDx.

### (Description of Processing Flow)

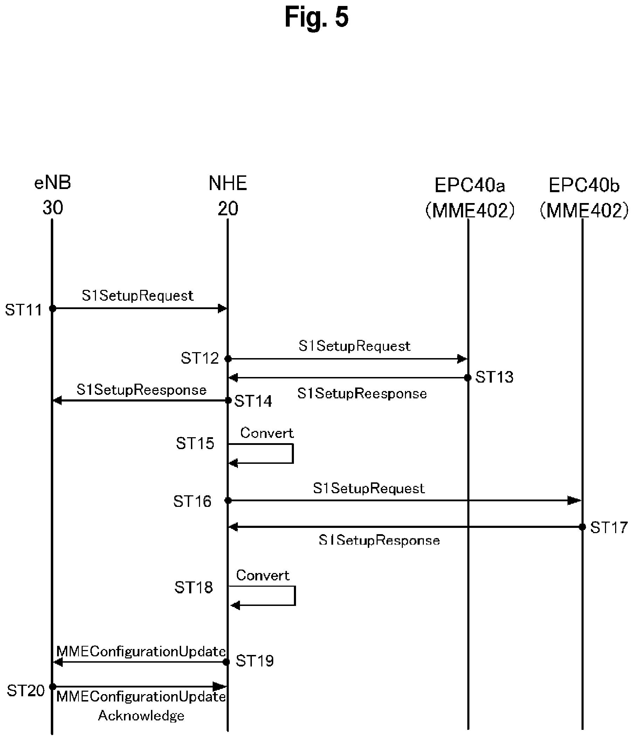

Referring to Fig. 5, an explanation will be provided about an example of processing for an initialization operation in the mobile communications system 100. The initialization operation is executed after turning on the power of the relay apparatus 20 and completing establishment of a backhaul channel.

In step ST11, the base station 30 transmits an S1 Setup Request, which is a setup request for establishing an S1 link with an MME 402 for a core network 40a and an MME 402 for a core network 40b, to the relay apparatus 20. The S1 Setup Request includes, for example, the PLMNs of the mobile network operators a and b as parameters.

The relay apparatus 20 causes the division integration unit 24 to determine a transmission destination(s) of the received S1 Setup Request and judges whether or not to cause the converter 28 to convert the parameter(s) included in the S1 Setup Request. The above-mentioned judgment is performed, for example, by the aforementioned method. Let us assume that the relay apparatus 20 determines that the transmission destinations are the MME 402 for the core network 40a and the MME 402 for the core network 40b and that the parameter for the core network 40a is not to be converted and the parameter for the core network 40b is to be converted. In this case, first in step ST12, the relay apparatus 20 does not convert the parameter and transmits the S1 Setup Request to the MME 402 for the core network 40a.

Next, in step ST13, the MME 402 for the core network 40a transmits an S1 Setup Reponse to the relay apparatus 20 in response to the receipt of the S1 Setup Request. The S1 Setup Reponse includes, for example, a GUMMEI (Globally Unique MME Identifier) of the MME 402 for the core network 40a as a parameter.

Then, in step ST14, the relay apparatus 20 transmits the S1 Setup Reponse to the base station 30 in response to the receipt of the S1 Setup Reponse.

Subsequently, in step ST15, the relay apparatus 20 converts the parameter included in the S1 Setup Request in order to transmit the S1 Setup Request to the MME 402 for the core network 40b. This conversion is the conversion from the first parameter to the second parameter. For example, the relay apparatus 20 converts the value of TAI (the first parameter) included in the S1 Setup Request into a specified value desired by the mobile network operator b (the second parameter).

Next, in step ST16, the relay apparatus 20 transmits the S1 Setup Request, including the converted parameter in step ST16, to the MME 402 for the core network 40b.

Then, in step ST17, the MME 402 for the core network 40b transmits the S1 Setup Reponse to the relay apparatus 20. The S1 Setup Reponse includes, as parameters, for example, a GUMMEI (Globally Unique MME Identity)), a PLMN, an eNB-ID, and a TAC (Tracking Area Code) of the MME 402 for the core network 40b.

Subsequently, in step ST18, the relay apparatus 20 converts a specified parameter included in the S1 Setup Response received in step ST17 (conversion to the first parameter). For example, the TAI is converted to the parameter before the conversion in step ST15.

Next, in step ST19, the relay apparatus 20 transmits an MME Configuration Update to the base station 30. In step ST20, the base station 30 transmits MME Configuration Update Acknowledge as a receipt acknowledgement to the relay apparatus 20 in response to the receipt of the MME Configuration Update.

As a result of the above-described processing, the S1 link is established between the base station 30 and the MME 402 for the core network 40a and the MME 402 for the core network 40b.

Regarding the initialization setting of the S1 link, an explanation has been provided with reference to Fig. 5 about the example of the processing for the division or determination of the transmission destination, and the parameter conversion performed by the division integration unit 24 and the converter 28 for the relay apparatus 20; however, the performance of the above-described processing is not limited to the initialization setting of the S1 link. For example, the processing by the division integration unit 24 and the converter 28 may be performed upon handover, initialization setting of an X2 link, and initialization setting of NG and Xn interfaces for 5G. For example, upon the handover processing, the aforementioned processing of the first conversion and the second conversion by the converter 28 may be performed on a parameter(s) included in, for example, a handover request and a receipt acknowledgement of the handover request.

The parameter(s) converted by the converter 28 includes parameters such as an E-CGI, a TAC, and an EAI which need to be uniquely identified within each mobile network MN. The parameter(s) converted by the converter 28 further needs to be uniquely identified within each mobile network MN and includes a parameter associated with a cell.

Regarding parameters, such as a PCI (Physical Cell Identifier) and a CELL-ID, which are linked to cells but do not need to be uniquely identified within each mobile network MN, they may be converted or may not be converted by the converter 28.

Parameters such as the identification information about the terminal device(s) 10, RF (Radio Frequency) information left abandoned by the terminal device 10, and information about operations of the terminal device(s) 10 and the base station(s) 30 may be designed to be not converted by the converter 28.

### (Explanation of Configuration Patterns)

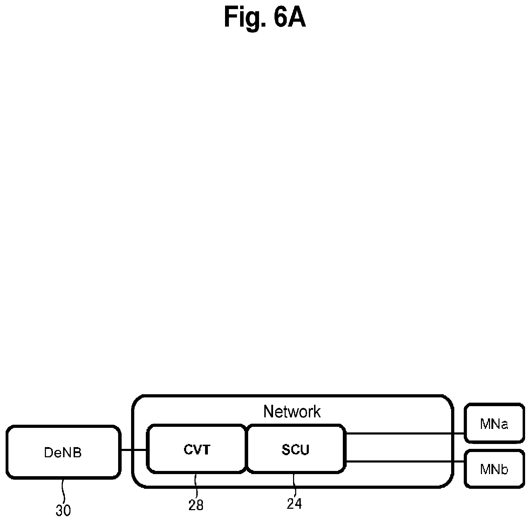

Configuration (arrangement) patterns of the division integration unit 24 and the converter 28 in the mobile communications system 100 will be described with reference to Fig. 6A to Fig. 6E. In this embodiment, an explanation has been provided about the configuration where the division integration unit 24 and the converter 28 for the relay apparatus 20 are located between the base station 30 and the mobile network MN; however, the arrangement of the division integration unit 24 and the converter 28 is not limited to this example. Some patterns of the arrangement of the division integration unit 24 and the converter 28 will be explained.

Fig. 6A is a configuration pattern explained above in this embodiment. In an example illustrated in Fig. 6A, the division integration unit 24 and the converter 28 are located in the network between the base station 30 and the mobile networks MN. The division integration unit 24 and the converter 28 are implemented by, for example, the aforementioned relay apparatus 20. In the configuration illustrated in Fig. 6A, in the communications from the base station 30 to the mobile network MN, the processing by the division integration unit 24 is performed after the processing by the converter 28. In the communications from the mobile network MN to the base station 30, the processing by the converter 28 is performed after the processing by the division integration unit 24.

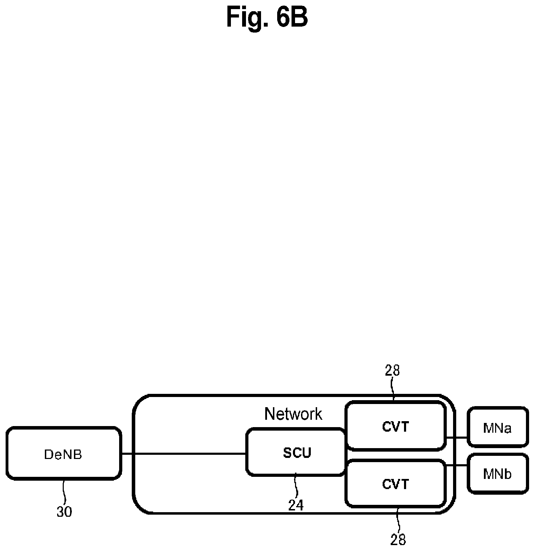

In Fig. 6B to Fig. 6E explained below, regarding the division integration unit 24 and the converter 28, the configuration located on the left side performs the processing first in the communications from the base station 30 to the mobile network MN and the configuration located on the right side performs the processing first in the communications from the mobile network MN to the base station 30.

In an example illustrated in Fig. 6B, the division integration unit 24 and converters 28 are located in the network between the base station 30 and the mobile networks MN. The division integration unit 24 and the converters 28 are implemented by, for example, the aforementioned relay apparatus 20. The division integration unit 24 is located on the left side of the converters 28. Two converters 28 are provided and each converter 28 is provided corresponding to either one of the two mobile networks MN.

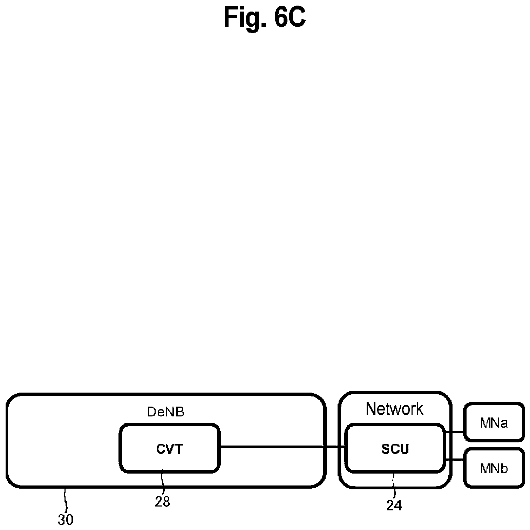

In an example illustrated in Fig. 6C, the converter 28 is provided at the base station 30 and the division integration unit 24 is located in a network between the base station 30 and the mobile network MN. The converter 28 is implemented by an apparatus provided at the base station 30. The apparatus is, for example, an apparatus having a similar configuration to that of the relay apparatus 20 and is a computer including a processor. The same applies to an apparatus provided at the base station 30, which will be explained below. The division integration unit 24 is implemented by, for example, the aforementioned relay apparatus 20.

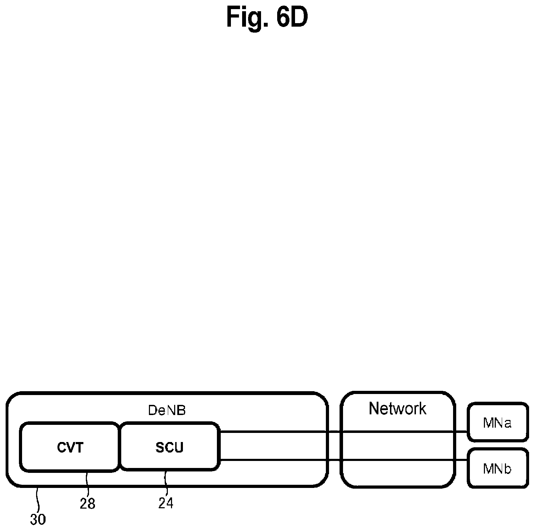

In an example illustrated in Fig. 6D, the division integration unit 24 and the converter 28 are provided at the base station 30. The division integration unit 24 and the converter 28 are implemented by an apparatus provided at the base station 30. The converter 28 is located on the left side and the division integration unit 24 is located on the right side.

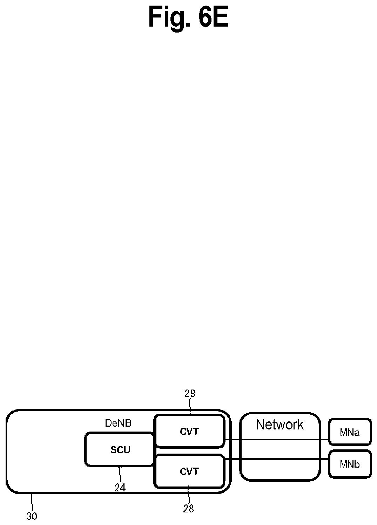

In an example illustrated in Fig. 6E, the division integration unit 24 and converters 28 are provided at the base station 30. The division integration unit 24 and the converters 28 are implemented by an apparatus provided at the base station 30. The division integration unit 24 is located on the left side of the converter 28. Two converters 28 are provided and each converter 28 is provided corresponding to either one of the two mobile networks MN.

Regarding the mobile communications system 100, advantages of the configurations illustrated in Fig. 6A to Fig. 6E will be explained below.

### - Centralization of Division Integration Unit 24 and Converter 28 (Fig. 6A, Fig. 6B, Fig. 6D, and Fig. 6E)

In Fig. 6A, Fig. 6B, Fig. 6D, and Fig. 6E, the division integration unit 24 and the converter 28 are provided at the same configuration, that is, at the base station 30 or the relay apparatus 20. As a result, network loads or tight communication lines will not occur in transmission and receipt of data, etc., between the division integration unit 24 and the converter 28. As a result, it becomes possible to increase communication speed and communication traffic volume of user content. Particularly, 5G is required to achieve ultra-low latency communications as compared to LTE, so it is preferable to reduce the communications using backhaul lines, which may cause delay, as much as possible. Therefore, the configurations illustrated in Fig. 6A, Fig. 6B, Fig. 6D, and Fig. 6E are effective in terms of the increase in possible communication traffic volume and low latency in communications.

### - Centralization on Network's Side (Fig. 6A and Fig. 6B)

As compared to the case where the division integration unit 24 and the converter 28 are located at the base station 30, there is a case where it becomes easier to synchronize the system if they are located on the network's side, that is, in the network between the base station 30 and the mobile network MN. For example, there is a case where different base stations 30 are used for communications according to the LTE standards and communications according to the 5G standards. In such a case, it becomes sometimes complicated to perform synchronization in the mobile communications system 100 according to this embodiment.

Furthermore, the electric power required for a base station(s) in 5G is estimated to be three to four times larger than that in LTE and nine times larger as a whole, so further power saving is required. By locating the division integration unit 24 and the converter 28 on the network's side, it is possible to reduce functions of the base station 30 and reduce the power consumption. Moreover, since the plurality of base stations 30 are connected to the relay apparatus 20 which is installed on the network's side, it is unnecessary to locate the division integration unit 24 and the converter 28 at each of the plurality of base stations 30 because of the centralization on the network's side. As a result, it is possible to reduce the power consumption of the entire mobile communications system 100.

If an attempt is made to secure an area in 5G which is equivalent to 4G, it is said that three to four times the number of base stations are required. In order to increase the number of base stations, securement of station placement spaces and relaxation of station placement conditions to construct desired areas would become issues and downsizing of the base stations would be required. By locating the division integration unit 24 and the converter 28 on the network's side, it is possible to reduce the requirements demanded for the base stations 30 and realize the downsizing.

In order to operate the base station 30 continuously for a user(s), it is necessary to reduce troubleshooting time and reduce maintenance workload. Since generally the size of the base station has limitations, it is difficult for the base station's side to secure hardware redundancy of functions. The hardware redundancy can be secured by placing this function on the network's side.

Furthermore, if the division integration unit 24 and the converter 28 are located at the base station 30, it is impossible to find out factors upon disconnection of transmission lines and failure time will thereby extend. For example, items to be handled on the base station 30 side which require workload for troubleshooting will increase. By placing them on the network's side, it is possible to extend operation time and reduce the maintenance workload.

Generally, the base station and the network require regular work for maintenance or updates. Therefore, if the number of base stations becomes enormous, it will be further required to standardize and reduce such work. If the division integration unit 24 and the converter 28 are located on the network's side, it is unnecessary to add functions to the base station 30 side. So, existing equipment and maintenance operation systems of the base station 30, which is a standard product, or a client (MNO) can be used as they are, which will lead to the standardization and reduction of the work. Also, an update is sometimes limited by hardware, there may be a case where the update involves replacement work. If the division integration unit 24 and the converter 28 are located at the base station 30, an enormous amount of work is required to make the hardware adapt to the latest functions. Therefore, the workload can be reduced dramatically by placing them on the network's side.

Examples of functions required for 5G include concurrent processing capability and low latency capability to be implemented by, for example, MEC (Multi-access Edge Computing) or edge computing. Generally, the hardware scale of a base station is limited in order to conduct practical station placement and it is thereby necessary to select or discard functions to be implemented at the base station. Accordingly, if the division integration unit 24 and the converter 28 are located at the base station 30 which has a limited throughput, resources which can be used for, for example, 5G or concurrent connections will decrease. By locating the division integration unit 24 and the converter 28 on the network's side, processing speed and concurrent connections of the base station 30 will increase and communication traffic volume per hour / speed will increase.

### - Centralization on Base Station's Side (Fig. 6D and Fig. 6E)

Since in 5G NSA (Non Stand Alone) services are provided by utilizing an existing LTE network, the premise is that existing equipment is operated. On the other hand, in order to expand 5G, it is difficult to actively add functions, or allocate operation resources, to LTE which has become an old generation. If the division integration unit 24 and the converter 28 are located at the base station 30, it becomes unnecessary to add functions to the network's side in order to implement the mobile communications system 100 according to this embodiment. So, it becomes possible to directly take over the existing network and the maintenance operation systems of the standard product or the client (MNO), so that the expansion of 5G can be promoted.

### - Placement of Division Integration Unit 24 on Network's Side (Fig. 6A, Fig. 6B, and Fig. 6C)

Examples of the functions required for 5G include the concurrent processing capability and the low latency capability to be implemented by, for example, MEC or edge computing. Generally, the hardware scale of a base station is limited in order to conduct practical station placement and it is thereby necessary to select or discard functions to be implemented at the base station. If the division integration unit 24 is located at the base station 30, it is necessary to set a plurality of IP-SEC (Security Architecture for IP) for each traffic divided by the division integration unit 24. Since the termination of IP-SEC is greatly related to delay, the delay can be reduced by transmitting the IP-SEC in a state of being aggregated in the base station 30 (i.e., without being divided) and by the division integration unit 24 performing the division processing on the network's side. Consequently, the processing speed and the concurrent connections will increase and the communication traffic volume per hour / speed will increase.

### <Embodiment 2>

Embodiment 2 relates to a variation of the relay apparatus described in Embodiment 1. In this Embodiment 2, the relay apparatus 20 includes a plurality of emulators, each of which is associated with any one of a plurality of mobile networks MN. The emulator is configured to function as a virtual base station communicatively connected exclusively to a mobile network MN (for example, the mobile network MNa) which is associated with that emulator.

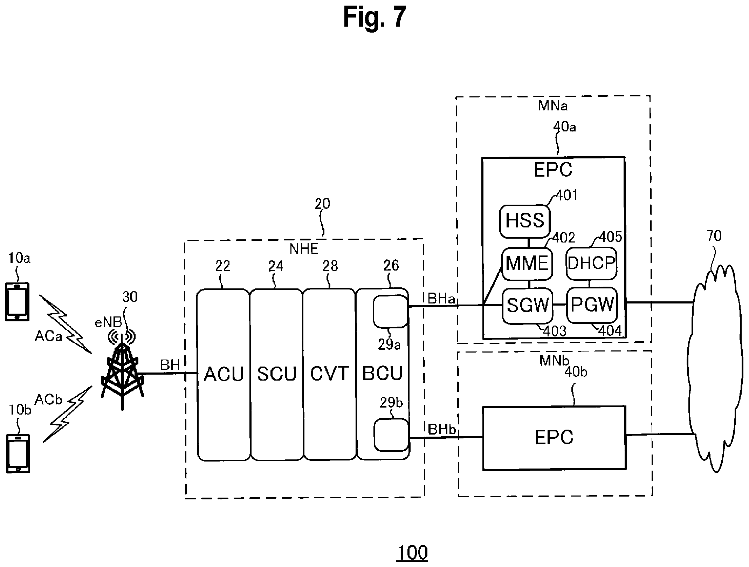

Fig. 7 is a schematic diagram illustrating the configuration of the mobile communications system 100 according to Embodiment 2. The relay apparatus 20 according to Embodiment 2 includes, as illustrated in Fig. 7, emulators 29a and 29b in addition to components of the relay apparatus 20 according to Embodiment 1. The emulators 29a and 29b may be provided as some components of the backhaul communication unit 26. In the following explanation, the emulators 29a and 29b will be referred to as the emulators 29 when collectively referring to them without distinguishing between them. Since other components of the mobile communications system 100 according to Embodiment 2 are similar to those of the mobile communications system 100 according to Embodiment 1, an explanation about them is omitted.

Each of the emulators 29a and 29b establishes a backhaul channel BH, which is associated with specific identification information ID, with a mobile network MN associated with the specific identification information. In an example illustrated in Fig. 7, the emulator 29a establishes a backhaul channel BHa with the mobile network MNa which is associated with the identification information IDa for identifying the mobile network operator a. The emulator 29a is not shared by another/other mobile network operator(s), but functions as an exclusive virtual base station for the mobile network operator a or the mobile network MNa. The base station 30 and the emulator 29a are provided on a one-on-one basis. Therefore, assuming that the mobile communications system 100 includes two base stations 30, two emulators 29a will be provided.

Furthermore, the emulator 29b establishes a backhaul channel BHb with the mobile network MNb which is associated with the identification information IDb for identifying the mobile network operator b. The emulator 29b is not shared by another/other mobile network operator(s), but functions as an exclusive virtual base station for the mobile network operator b or the mobile network MNb. The base station 30 and the emulator 29b are provided on a one-on-one basis.

The mobile network operator can set the emulator 29 as an endpoint of communication as if it were their own base station. For example, mutually different addresses (for example, IP addresses) to be used for the communication are assigned to the plurality of emulators 29, respectively.

The emulator 29 is configured to implement functions of the emulator 29 by execution of a computer program by the control unit for the relay apparatus 20. However, the emulator 29 may be configured mainly by hardware.

Generally, regarding the operation of the base station, a maintenance operation method is decided for each mobile network operator and it is necessary to avoid introducing a new mechanism from the viewpoint of adjustment workload and accident prevention. Contrarily, in this embodiment, the virtual base station which is associated with each mobile network operator can be emulated. As a result, the mobile network operator can use the base station 30 as if it were their own base station, so the adjustment of the maintenance operation will become no longer necessary or be reduced. As a result, the adjustment, the operation workload, and the possibility of accidents due to the introduction of a new system will be reduced dramatically.

### <Embodiment 3>

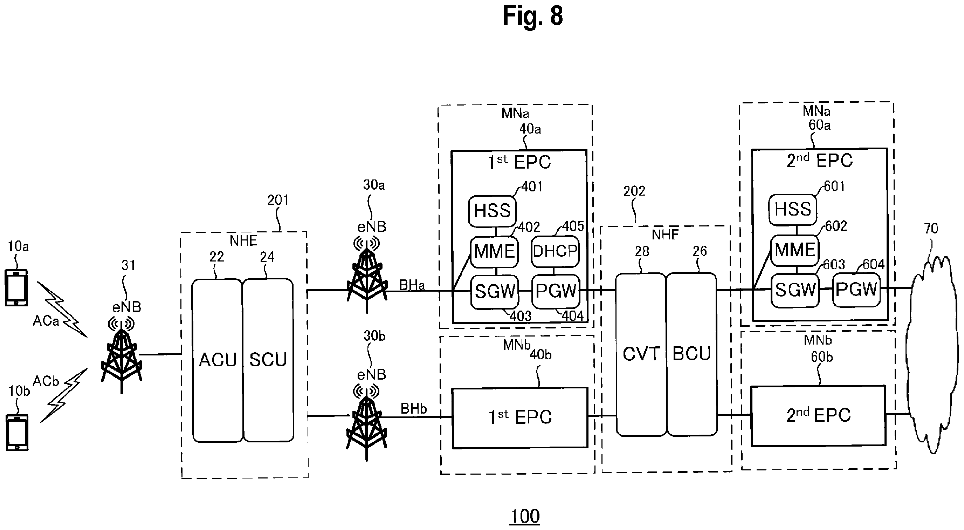

Embodiment 3 will be explained with reference to Fig. 8. The difference from Embodiment 1 is that in Embodiment 3, the mobile communications system 100 has a base station 31 in addition to the base station 30. Moreover, each mobile network MN has two core networks. Also, installed positions of the access communication unit 22, the division integration unit 24, the converter 28, and the backhaul communication unit 26 are different from those in Embodiment 1. Furthermore, instead of the relay apparatus 20 according to Embodiment 1, the mobile communications system 100 according to Embodiment 3 includes relay apparatuses 203 and 205. The differences from Embodiment 1 will be mainly described below in more detail.

The base station 30 functions as a donor-cell base station. The base station 30 is provided for each mobile network MN and performs communication by radio or by wire with the mobile network MN. The base station 31 functions as a relay base station that relays communications between the terminal device 10 and the base station 30. The base station 31 is shared by a plurality of mobile networks MN.

The mobile network MN has a first core network 40 and a second core network 60 as core networks. Since the configuration of the first core network 40 is similar to that of the core network 40 according to Embodiment 1, an explanation about it is omitted.

Incidentally, the base station 30 and the first core network 40 may be provided as relay apparatuses which relay communications between the base station 31 and the second core network 60.

The second core network 60 is a network which mainly manages the terminal device 10. For example, the second core network 60 performs, for example, connection control of outgoing calls from and incoming calls to, and billing management of, the terminal device 10. Specifically, the second core network 60 includes an HSS 601, MME 602, an SGW 603, and a PGW 604. The HSS 601 is a server which manages user identification information of a user who uses the terminal device 10. The MME 602 is a node which performs position management and mobility management of calls, etc., of the terminal device 10. The SGW 603 is a node which transmits user packet data. The PGW 604 is a node which has an interface with the external network 70.

The relay apparatus 203 is provided in a network between the base station 30 and the base station 31. The communication between the relay apparatus 203 and the base station 30 and the base station 31 may be by radio or by wire. The relay apparatus 203 is implemented by, for example, the computer 300 explained with reference to Fig. 3. The relay apparatus 203 includes, as functional components, the access communication unit 22 and the division integration unit 24. Since processing by the access communication unit 22 and the division integration unit 24 is similar to that in Embodiment 1, an explanation about it is omitted.

The relay apparatus 205 is provided in a network between the first core network 40 and the second core network 60. The communication with the first core network 40 and the second core network 60 by the relay apparatus 205 may be by radio or by wire. The relay apparatus 205 is implemented by, for example, the computer 300 explained with reference to Fig. 3. The relay apparatus 205 includes, as functional components, the converter 28 and the backhaul communication unit 26. Since processing by the converter 28 and the backhaul communication unit 26 is similar to that in Embodiment 1, an explanation about it is omitted.

According to Embodiment 3, the mobile communications system 100 includes: the relay apparatus 203 which relays communications between the base station 30 and the base station 31; and mobile networks MN which correspond respectively to a plurality of base stations 30 to which the relay apparatus 203 connects. The mobile network MN includes the relay apparatus 205 which relays communications between the first core network 40 which communicates with the base station 30, and the second core network 60 which communicates with the external network 70. The relay apparatus 203 includes: the access communication unit 22 which receives the uplink data associated with the first identification information from the terminal device 10; and the division integration unit 24 which determines to transmit the uplink data to the mobile network MN associated with the first identification information, among the plurality of mobile networks MN. The relay apparatus 205 includes: the converter 28 which converts the first parameter, which is included in the uplink data received from the first core network 40, into the second parameter on the basis of the first identification information; and the backhaul communication unit 26 which transmits the uplink data including the second parameter to the second core network 60 associated with the first identification information.

### <Embodiment 4>

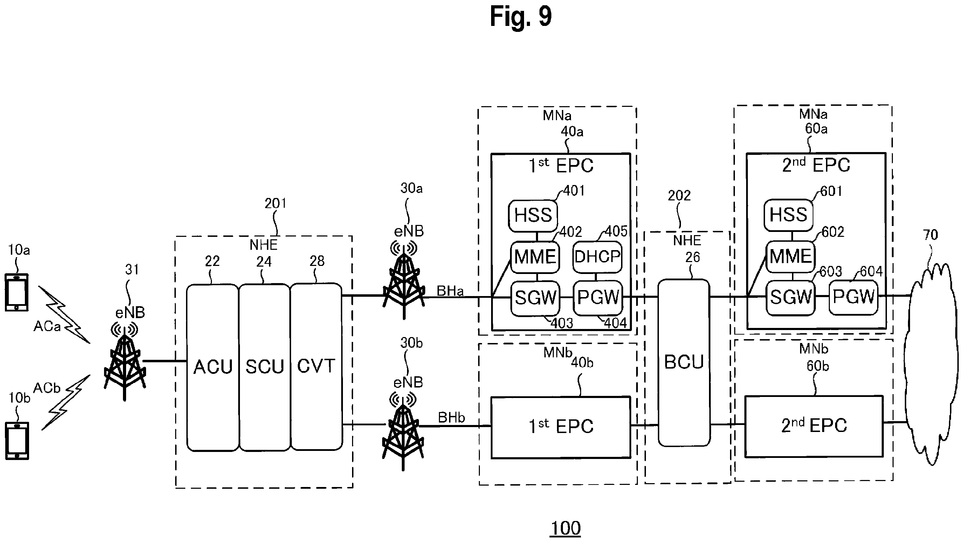

Embodiment 4 will be explained with reference to Fig. 9. Regarding Embodiment 4 as compared to Embodiment 3, the placement position of the converter 28 is different. In Embodiment 4, the converter 28 is provided at the relay apparatus 203, but not at the relay apparatus 205. Since other components are similar to Embodiment 4, an explanation about them is omitted.

According to Embodiment 4, the mobile communications system 100 includes: the relay apparatus 203 which relays communications between the base station 30 and the base station 31; and mobile networks MN which correspond respectively to a plurality of base stations 30 to which the relay apparatus 203 connects. The mobile network MN includes the relay apparatus 205 which relays communications between the first core network 40 which communicates with the base station 30, and the second core network 60 which communicates with the external network 70. The relay apparatus 203 includes: the access communication unit 22 which receives the uplink data associated with the first identification information from the terminal device 10; the division integration unit 24 which determines to transmit the uplink data to the mobile network MN associated with the first identification information, among the plurality of mobile networks MN; and the converter 28 which converts the first parameter, which is included in the uplink data received from the division integration unit 24, into the second parameter on the basis of the first identification information. The relay apparatus 205 includes the backhaul communication unit 26 which transmits the uplink data, including the second parameter received from the first core network 40, to the second core network 60 associated with the first identification information.

### <Other Embodiments>

The embodiments of the present invention have been described above, but it should not be understood that the present invention is limited to the disclosure of these embodiments. The present invention can be applied in various variations without being limited to the above-described embodiments.

Specifically, each of the above-described embodiments has been described on the premise that the telecommunications standard is LTE, but the invention is not limited to this example. For example, the present invention can be applied to, for example, 5G which is a successor standard of LTE.

### REFERENCE SIGNS LIST

- 10: terminal device
- 20: relay apparatus
- 22: access communication unit
- 24: division integration unit
- 26, 26B: backhaul communication unit
- 28: converter
- 29: emulator
- 30: donor-cell (macro-cell) base station
- 40: core network
- 70: external network
- 100: mobile communications system
- MN: mobile network

## Claims

1. A relay apparatus comprising a processor and a storage unit,
wherein the processor is configured to implement the following by executing a program stored in the storage unit:
a first communication unit that receives uplink data associated with first identification information from a base station;
a division integration unit that determines to transmit the uplink data to the mobile network associated with the first identification information among a plurality of mobile networks;
a converter that converts a first parameter, which is included in the uplink data received from the base station, into a second parameter on the basis of the first identification information; and
a second communication unit that transmits the uplink data including the second parameter to the mobile network associated with the first identification information.

2. The relay apparatus according to claim 1,
wherein the converter performs the conversion after the determination by the division integration unit.

3. The relay apparatus according to claim 1,
wherein the division integration unit performs the determination after the conversion by the converter.

4. The relay apparatus according to any one of claims 1 to 3,
wherein the relay apparatus is provided between the base station and the plurality of mobile networks.

5. The relay apparatus according to any one of claims 1 to 3,
wherein the relay apparatus is provided at the base station.

6. The relay apparatus according to any one of claims 1 to 5,
comprising a plurality of emulators, each emulator of which is associated with any one of the plurality of mobile networks,
wherein the emulator is configured to function as a virtual base station which is communicatively connected exclusively to the mobile network associated with the emulator.

7. The relay apparatus according to claim 6,
wherein mutually different addresses to be used for communication are assigned to the plurality of emulators, respectively.

8. The relay apparatus according to any one of claims 1 to 7,
wherein the second communication unit receives downlink data from the plurality of mobile networks;
the converter converts the second parameter included in the downlink data into the first parameter;
the division integration unit integrates the downlink data received from the plurality of mobile networks; and
the first communication unit outputs the downlink data, which includes the first parameter and has been integrated, to the base station.

9. The relay apparatus according to any one of claims 1 to 8,
wherein the first parameter is uniquely identified on the plurality of mobile networks and the second parameter is uniquely identified on a specific mobile network among the plurality of mobile networks.

10. The relay apparatus according to any one of claims 1 to 9,
wherein the first parameter and the second parameter include identification information of the base station.

11. The relay apparatus according to any one of claims 1 to 10,
wherein the converter converts the first parameter into the second parameter on the basis of a conversion table associated with the first identification information.

12. A mobile communications system comprising:
a first relay apparatus that relays communications between donor-cell base stations and a relay base station; and
mobile networks respectively corresponding to a plurality of the respective donor-cell base stations to which the first relay apparatus connects,
wherein each of the mobile networks includes a second relay apparatus that relays communications between a first core network which communicates with the donor-cell base stations, and a second core network which communicates with an external network;
wherein the first relay apparatus includes:
a first communication unit that receives uplink data associated with first identification information from a terminal device; and
a division integration unit that determines to transmit the uplink data to the mobile network which is associated with the first identification information, among a plurality of the mobile networks; and
wherein the second relay apparatus includes:
a converter that converts a first parameter, which is included in the uplink data received from the first core network, into a second parameter on the basis of the first identification information; and
a second communication unit that transmits the uplink data including the second parameter to the second core network associated with the first identification information.

13. A mobile communications system comprising:
a first relay apparatus that relays communications between donor-cell base stations and a relay base station; and
mobile networks respectively corresponding to a plurality of the respective donor-cell base stations to which the first relay apparatus connects,
wherein each of the mobile networks includes a second relay apparatus that relays communications between a first core network which communicates with the donor-cell base stations, and a second core network which communicates with an external network;
wherein the first relay apparatus includes:
a first communication unit that receives uplink data associated with first identification information from a terminal device;
a division integration unit that determines to transmit the uplink data to the mobile network which is associated with the first identification information, among a plurality of the mobile networks; and
a converter that converts a first parameter, which is included in the uplink data received from the division integration unit, into a second parameter on the basis of the first identification information; and
wherein the second relay apparatus includes
a second communication unit that transmits the uplink data, including the second parameter received from the first core network, to the second core network associated with the first identification information.

14. A relay method implemented by a computer including a processor and a storage unit, the method comprising, by execution of a program stored in the storage unit by the processor:
receiving uplink data associated with first identification information from a base station; determining to transmit the uplink data to the mobile network associated with the first identification information, from among a plurality of mobile networks;
converting a first parameter, which is included in the uplink data received from the base station, into a second parameter on the basis of the first identification information; and transmitting the uplink data including the second parameter to the mobile network associated with the first identification information.

15. A storage medium with a computer program stored therein for executing a relay method implemented by a computer including a processor and a storage unit, the method comprising, by execution of a program stored in the storage unit by the processor:
receiving uplink data associated with first identification information from a base station;
determining to transmit the uplink data to the mobile network associated with the first identification information, from among a plurality of mobile networks;
converting a first parameter, which is included in the uplink data received from the base station, into a second parameter on the basis of the first identification information; and
transmitting the uplink data including the second parameter to the mobile network associated with the first identification information.
